# EUROPEAN PATENT APPLICATION

(11) **EP 4 383 582 A1**
(43) Date of publication of application: **12.06.2024**
(21) Application number: 22852179.5
(22) Date of filing: 02.08.2022
(51) Int. Cl.: H04B 7/0413, H04W 76/19

(54) **METHOD EXECUTED BY USER EQUIPMENT, AND USER EQUIPMENT**

(30) Priority: 04.08.2021 CN 202110893975
(71) Applicant: Sharp Kabushiki Kaisha, Sakai-shi Osaka 590-8522 (JP)
(72) Inventor: LIU, Renmao, Shanghai 201206 (CN); LIU, Lei, Shanghai 201206 (CN)
(74) Representative: Müller-Boré & Partner Patentanwälte PartG mbB
(86) International application number: PCT/CN2022/109693
(87) International publication number: WO 2023/011467

(57) **Abstract**

Provided in the present invention are a method performed by user equipment and user equipment. A method performed by user equipment, including: receiving, by user equipment, a configuration by a network for a beam failure recovery procedure/parameter of each transmit/receive point of a serving cell; and for each transmit/receive point configured with a reference signal set for beam failure detection and/or beam failure recovery, if a medium access control entity receives a beam failure instance of a physical layer indicating the transmit/receive point, and if the medium access control entity considers that a beam failure has occurred at the transmit/receive point, initiating, according to a beam failure detection and recovery situation of another transmit/receive point in the serving cell, a random access procedure or a sounding reference procedure to perform beam failure recovery.

## Description

### TECHNICAL FIELD

The present invention relates to the technical field of wireless communications. More specifically, the present invention relates to a beam failure recovery method performed by user equipment, and corresponding user equipment.

### BACKGROUND

A work item related to further enhancements on MIMO (FeMIMO) related to Release 17 was proposed (see non-patent literature: RP-193133 New WID: Further enhancements on MIMO for NR) and approved at the 3rd Generation Partnership Project (3GPP) RAN#86 plenary meeting held in December 2019. For the latest version of the work item, refer to non-patent literature: RP-211586 Revised (2nd) WID proposal FeMIMO. The work item mainly studied enhancements on multi-beam operations, enhancements on multi-TRP operations, enhancements on SRSs, and enhancements on CSI measurement and reporting. Enhancements on multi-beam and multi-TRP operations include intra-cell scenarios and inter-cell scenarios.

In FeMIMO, in order to better support multi-TRP, a reference signal for beam failure detection and/or beam failure recovery may be respectively configured for each TRP. When a beam of a current service is discovered by means of detection, the reference signal for beam failure detection and/or beam failure recovery may be detected so as to obtain a candidate beam, and the network is notified of relevant information is by means of a beam failure recovery procedure. In FeMIMO, a beam failure recovery procedure may be performed per TRP.

In an inter-cell scenario, the network configures physical layer measurement of a non-serving cell, and UE reports a measurement result to a serving cell. The network side decides, according to the measurement result reported by the UE, whether to use a physical resource (e.g., a beam) of the non-serving cell for data transmission of the UE in this case, and notifies the UE by means of a physical layer indication or a MAC indication, rather than the network transmitting a handover command to the UE to complete a complete handover procedure. In this way, a resource of a non-serving cell can be used more quickly, thereby improving mobility. The method is particularly applicable to applications such as high-speed rail. Multi-TRP may also be supported in inter-cell scenarios. For example, one TRP is on a serving cell, and another TRP is on a non-serving cell.

The present invention discusses issues related to how to perform beam failure recovery in multi-beam and/or multi-TRP scenarios.

### SUMMARY

An objective of the present invention is to provide a method performed by user equipment and used to perform beam failure recovery in a multi-beam and/or multi-TRP scenario, and user equipment.

In order to address the aforementioned issue, the present invention provides a method performed by user equipment and user equipment.

According to a first aspect of the present invention, the method comprises:
receiving, by user equipment, a configuration by a network for a beam failure recovery procedure/parameter of each transmit/receive point of a serving cell; and
for each transmit/receive point configured with a reference signal set for beam failure detection and/or beam failure recovery, if a medium access control entity receives a beam failure instance of a physical layer indicating the transmit/receive point, and if the medium access control entity considers that a beam failure has occurred at the transmit/receive point, initiating, according to a beam failure detection and recovery situation of another transmit/receive point in the serving cell, a random access procedure or a sounding reference procedure to perform beam failure recovery.

In the method performed by user equipment according to the first aspect of the present invention, the configuration of the beam failure recovery procedure/parameter of each TRP of the serving cell by the network comprises a reference signal or a reference signal set for the BFD and/or the BFR, and information such as a maximum counter value for counting beam failure instance indications and a relevant timer.

In the method performed by user equipment according to the first aspect of the present invention, upon receiving a beam failure instance indication of the physical layer indicating the beam failure instance of the TRP, if BFI_COUNTER of the TRP is greater than or equal to *beamFailurelnstanceMaxCount* of the TRP, the MAC entity considers that the beam failure has occurred at the TRP.

In the method performed by user equipment according to the first aspect of the present invention, the beam failure has occurred at the TRP, and the serving cell is the SpCell, and the UE performs one or a plurality of the following determinations and operations:
if each TRP among the two TRPs of the serving cell is configured with a reference signal set for the BFD and/or the BFR, if the BFR MAC CE for the other TRP has been triggered and/or transmitted, and if the BFR recovery procedure corresponding to the TRP has not been successfully completed, initiating a random access procedure to recover from the beam failure;
if each TRP among the two TRPs of the serving cell is configured with a reference signal set for the BFD and/or the BFR, if the BFR MAC CE for the other TRP has been triggered and/or transmitted, and if the TRP has no candidate beam, initiating a random access procedure to recover from the beam failure;
if each TRP among the two TRPs of the serving cell is configured with a reference signal set for the BFD and/or the BFR, if BFI_COUNTER of the other TRP is greater than or equal to the maximum value, initiating a random access procedure to recover from the beam failure;
if each TRP among the two TRPs of the serving cell is configured with a reference signal set for the BFD and/or the BFR, and if the BFR for the other TRP has been triggered and not canceled, initiating a random access procedure to recover from the beam failure;
if the serving cell is only configured with a reference signal set of the one of the TRPs for the BFD and/or the BFR, initiating a random access procedure to recover from the beam failure; and
if each TRP among the two TRPs of the serving cell is configured with a reference signal set for the BFD and/or the BFR, if only the one of the TRPs or only one reference signal set for the BFD and/or the BFR is activated, and if the TRP of which BFI_COUNTER is greater than or equal to beamFailureInstanceMaxCount is the activated TRP or reference signal set, initiating a random access procedure to recover from the beam failure.

In the method performed by user equipment according to the first aspect of the present invention, the beam failure has occurred at the TRP, the serving cell is an SCell, and the beam failure recovery procedure determines that at least one of the BFRs for one of the TRPs of one of the SCells has been triggered and not canceled and evaluation of candidate beams of the TRP has been completed, and the UE performs one or a plurality of the following determinations and operations:
if each TRP among the two TRPs of the serving cell is configured with a reference signal set for the BFD and/or the BFR, if an uplink shared channel (UL-SCH) resource for a new transmission is available, and if the UL-SCH resource can accommodate the beam failure information of one of the TRPs in the BFR MAC CE plus a subheader of the MAC CE, but cannot accommodate the beam failure information of all the TRPs, triggering the SR procedure for the beam failure recovery;
if the serving cell is only configured with a reference signal set of one of the TRPs for the BFD and/or the BFR, if the UL-SCH resource for a new transmission is available, and if the UL-SCH resource cannot accommodate the BFR MAC CE plus the subheader of the MAC CE, triggering the SR procedure for the beam failure recovery; and
if each TRP among the two TRPs of the serving cell is configured with a reference signal set for the BFD and/or the BFR, but only one of the TRPs or only one reference signal set for the BFD and/or the BFR is activated, if the UL-SCH resource for a new transmission is available, and if the UL-SCH resource cannot accommodate the BFR MAC CE plus the subheader of the MAC CE, triggering the SR procedure for the beam failure recovery.

In the method performed by user equipment according to the first aspect of the present invention, the serving cell is the SCell, and when a MAC PDU is transmitted, and the PDU comprises the BFR MAC CE or the truncated BFR MAC CE,
if each TRP among the two TRPs of the serving cell is configured with a reference signal set for the BFD and/or the BFR, and if the BFR MAC CE comprises the beam failure information of all the TRPs in the SCell, the UE cancels all triggered BFRs for the the SCell; if the BFR MAC CE comprises only the beam failure information of the one of the TRPs in the the SCell, the UE cancels all of the triggered BFRs for the TRP;
if the serving cell is only configured with a reference signal set of one of the TRPs for the BFD and/or the BFR, and if the MAC CE comprises the beam failure information of the TRP, the UE cancels all of the triggered BFRs for the the TRP; or
if each TRP among the two TRPs of the serving cell is configured with a reference signal set for the BFD and/or the BFR, but only one of the TRPs or only one reference signal set for the BFD and/or the BFR is activated, and if the MAC CE comprises the beam failure information of the activated TRP, the UE cancels all of the triggered BFRs for the activated TRP.

In the method performed by user equipment according to the first aspect of the present invention, if the BFR of the TRP in the SCell has generated the pending SR, and if a random access procedure has been triggered because there is no valid PUCCH resource configuration and thus the SR cannot be transmitted, the random access procedure triggered for the BFR of the TRP is stopped after a BFR MAC CE or truncated BFR MAC CE comprising the TRP is transmitted,
if a beam failure occurs at both of two TRPs in the SCell or both of two reference signal sets for the BFR and/ the BFD, if a pending signal reception (SR) is generated for the two BFRs, and if a random access procedure has been triggered because there is no valid PUCCH resource configuration and thus the SR cannot be transmitted, the random access procedure is stopped after the BFR MAC CE or the truncated BFR MAC CE comprising the two TRPs is transmitted,
if the two BFRs are triggered because the beam failure occurs at both of the two TRPs in the SCell or both of the two reference signal sets for the BFR and/ the BFD, if two pending SRs are generated for the two BFRs, and if two random access procedures have been triggered because there is no valid physical uplink control channel (PUCCH) resource configuration and thus the two SRs cannot be transmitted, then after the BFR MAC CE or the truncated BFR MAC CE comprising one of the TRPs is transmitted, the random access procedure of the TRP is stopped, that is, the random access procedure of the other TRP continues being performed.

According to a second aspect of the present invention, the method comprises:
receiving, by user equipment (UE), a beam failure recovery procedure/parameter configured for a non-serving cell by a network, and
when the non-serving cell triggers beam failure recovery (the BFR), transmitting, by the user equipment (UE), the BFR MAC CE to the network,
wherein the BFR MAC CE carries information such as: non-serving cell PCI information, a non-serving cell index, and a non-serving cell identifier.

In the method performed by user equipment according to the second aspect of the present invention, the UE receives the MAC CE transmitted by the network, and the MAC CE comprises one or a plurality of the following pieces of information:
a deactivation indication of the TRP in the non-serving cell;
a deactivation indication of the non-serving cell;
the non-serving cell being used for reference signal measurement of the BFR and/or the BFD; and
a deactivation indication of the TCI state of the non-serving cell.

The UE performs one or a plurality of the following operations:
setting BFI_COUNTER of the non-serving cell to 0;
considering that a beam failure recovery procedure is successfully completed, and canceling all of the BFRs triggered in the non-serving cell; or
stopping a random access procedure triggered due to the pending SR of the BFR.

User equipment according to a third aspect of the present invention comprises: a processor; and a memory storing instructions, wherein the instructions, when run by the processor, perform the method according to the first aspect.

### Effect of Invention

According to the present invention, provided are a method performed by user equipment and used to perform beam failure recovery in a multi-beam and/or multi-TRP scenario, and user equipment, so as be able to quickly recover from a beam failure to perform data transmission, thereby improving performance.

### BRIEF DESCRIPTION OF THE DRAWINGS

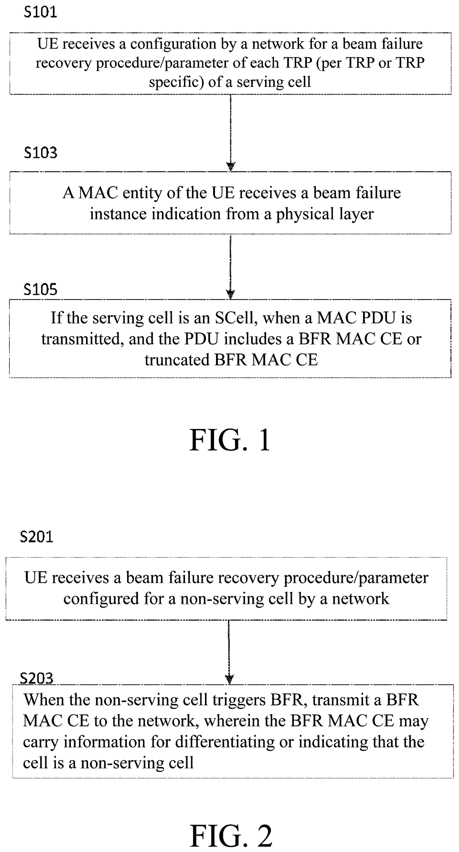

FIG. 1 is a flowchart showing a method performed by user equipment and used for beam failure recovery according to an embodiment of the present invention.
FIG. 2 is a flowchart showing a method performed by user equipment and used for beam failure recovery according to an embodiment of the present invention.

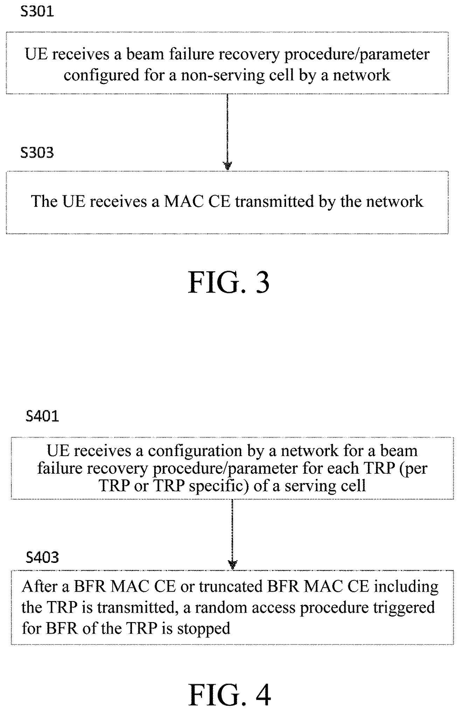

FIG. 3 is a flowchart showing a method performed by user equipment and used for beam failure recovery according to an embodiment of the present invention.
FIG. 4 is a flowchart showing a method performed by user equipment and used for beam failure recovery according to an embodiment of the present invention.
FIG. 5 is a simplified structural block diagram of user equipment (UE) according to the present invention.

### DETAILED DESCRIPTION

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

The following describes some terms involved in the present invention. For the specific meanings of the terms, please see the latest 3GPP standards and specifications.
UE: User Equipment
NR: New Radio
RRC: Radio Resource Control
MAC: Medium Access Control
RRC_CONNECTED: RRC connected state
RRC_INACTIVE: RRC inactive state
RRC_IDLE: RRC idle state
RAN: Radio Access Network
RSRP: Reference Signal Receiving Power
AS: Access Stratum
PDCCH: Physical downlink control channel
BWP: Bandwidth Part
DCI: Downlink Control Information
DL: Downlink
IE: Information Element
CE: Control Element
MIB: Master Information Block
SIB: System Information Block
RLM: Radio Link Monitoring
BFD: Beam Failure Detection
RLF: Radio Link Failure
BFR: Beam Failure Recovery
BLER: Block Error Rate
RRM: Radio Resource Management
Serving Cell: a PCell, a PSCell, or an SCell
SpCell: Special Cell, which may be a PCell or a PSCell
PCell: Primary Cell
PSCell: Primary SCG Cell
SCell: Secondary Cell
SCG: Secondary Cell Group
C-RNTI: Cell RNTI
RNTI: Radio Network Temporary Identifier
HARQ: Hybrid Automatic Repeat Request
SINR: Signal to Noise and Interference Ratio
DRB: (user) Data Radio Bearer
MIMO: Multiple-Input Multiple-Output
TRP: Transmit/Receive Point
TCI: Transmission Configuration Indicator
SRS: Sounding Reference Signal
CSI: Channel-State Information
PDSCH: Physical Downlink Shared Channel
PDCCH: Physical Downlink Control Channel
PUSCH: Physical Uplink Shared Channel
PUCCH: Physical Uplink Control Channel
PCI: Physical Cell Identifier
UL-SCH: Uplink Shared Channel

In the present invention, a network, a base station, and a RAN may be used interchangeably. The network may be a Long Term Evolution (LTE) network, a new RAT (NR) network, an enhanced Long Term Evolution (eLTE) network, or another network defined in a subsequent evolved version of the 3GPP.

In the present invention, user equipment (UE) may refer to an NR device supporting multi-beam enhancement, and may refer to an NR device supporting multi-TRP enhancement, and may refer to an NR device supporting FeMIMO, and may refer to an NR device supporting SRS enhancement, and may refer to an NR device supporting CSI measurement and reporting enhancement, and may refer to an NR device or an LTE device of other types, as described in the background.

In the present invention, a non-serving cell refers to a cell in which UE can perform data transmission (transmission and reception) of the UE on physical resources (including, but not limited to, a beam, a TRP, a TCI, a TCI state, various reference signals, and one or a plurality of various physical channels) thereof, and the cell does not need to be configured to be a serving cell. The name thereof may have a variety of possibilities, for example, "non-serving cell", "cell configured with only a UE-specific PDSCH, PDCCH, PUSCH, and PUCCH", "assistant cell", "assistant serving cell", "additional cell", "additional serving cell", etc. As long as the completed functions are the same, the various names listed above or possible other names are interchangeable. It may also be possible to refer to a cell by means of a certain configuration on the non-serving cell, for example "a TRP with a different PCI", "a TCI with a different PCI", "a dedicated PDSCH, and/or PDCCH, and/or PUSCH, and/or PUCCH with a different PCI", "a reference signal with a different PCI", etc. It may also be possible to refer to a cell by means of a function implemented by the non-serving cell, for example "a cell providing UE data transmission", "a cell supporting L1/L2 mobility", "a cell supporting inter-cell multi-beam and/or multi-TRP", etc. It may also be possible to refer to the cell by means of certain specialized messages, for example RRC-specific signaling dedicated to the non-serving cell.

Cancel, release, delete, flush, clear, etc., are interchangeable. Execute, use, employ, and apply are interchangeable. Configure and reconfigure are interchangeable. Index, indication, identifier, information, and number are interchangeable. "Set" and "set" are interchangeable.

"UL-SCH resource" and "UL grant" are interchangeable. "A TRP", "a TRP configured with a reference signal set for BFD and/or BFR", "a TRP index", "a reference signal set", "a reference signal set index", "a BFD reference signal set", "a BFR reference signal set", "a BFD reference signal set index", "a BFR reference signal set index", "a TCI", and "a TCI state" are interchangeable. "BFR MAC CE", "TRP BFR MAC CE" and "cell BFR MAC CE" are interchangeable. The "TRP BFR MAC CE" may also have other names, as long as the name is used to indicate a MAC CE of beam failure recovery of a certain TRP. The function of the MAC CE in the present invention may also be implemented by an indication of a physical layer, DCI, or a report.

Hereinafter, a description will be given of related art of the present invention.

Beam failure detection (BFD) and beam failure recovery (BFR) are performed in an RRC connected state. BFD is the UE detecting a beam failure and recovering from a beam failure according to a reference signal configured by a network. A BFD procedure may be related to each serving cell, including an SpCell and an SCell. A configured reference signal for the BFD procedure may be an SSB and/or a CSI-RS. The UE performs the BFD procedure on an activated downlink BWP. The UE, on the basis of the configured reference signal, compares a BLER of a downlink radio link and a threshold Q_{out_LR}. If downlink radio link quality is below Q_{out_LR}, the physical layer transmits a beam failure instance indication to an upper layer. Configured parameters for the BFD procedure further include: *beamFailureDetectionTimer* and *beamFailurelnstanceMaxCount. beamFailureDetectionTimer* is used to control a timer that is started or restarted after a MAC entity receives a beam failure instance indication transmitted by the physical layer. For BFD that occurs on the SpCell, the timer is stopped after BFR succeeds. A variable *BFI_COUNTER* is used by the MAC layer to count the number of consecutive beam failure instance indications that are received, and an initial value of the variable is 0. Each time a beam failure instance indication is received, 1 is added to the variable. If *beamFailureDetectionTimer* expires, or *beamFailureDetectionTimer, beamFailurelnstanceMaxCount,* or any reference signal for beam failure detection configured for the upper layer of the present serving cell changes, then *BFI_COUNTER* is cleared to zero. When *BFI_COUNTER* is greater than or equal to beamFailureInstanceMaxCount, if the serving cell is an SCell, BFR of the cell is triggered, and a BFR MAC CE or truncated BFR MAC CE including serving cell beam failure recovery information is transmitted; if the serving cell is not an SCell (i.e., the serving cell is an SpCell), a random access procedure is initiated on the SpCell to recover from the beam failure.

A criterion for determining that BFR is successful may be:
- if the serving cell is an SpCell, and if a random access procedure initiated for SpCell beam failure recovery is successful;
- alternatively, if the serving cell is an SCell, and if a HARQ process for transmitting a BFR MAC CE or truncated BFR MAC CE including serving cell beam failure recovery information receives an uplink grant scrambled by a C-RNTI, indicated by a PDCCH, and used for a new transmission;
- alternatively, if the SCell is deactivated.

For a scenario in which the serving cell is an SCell, a scheduling request procedure (SR) may be triggered due to UL-SCH resources not being sufficient to bear a BFR MAC CE, and once triggered, an SR is referred to as a pending SR. After the SR is triggered, if the SCell is not configured with valid PUCCH resources for transmitting the SR, a random access procedure may be triggered. When a MAC PDU carrying the BFR MAC CE of the SCell is transmitted, random access triggered due to the pending SR may be stopped.

In a multi-TRP scenario, a plurality of TRPs may be present in a cell, and the network may configure, for each TRP, a reference signal or a reference signal set for BFD and/or BFR, which may be referred to as a BFDBFR configuration per TRP or a TRP specific BFDBFR configuration. These reference signals or reference signal sets may or may not overlap. Each reference signal set may be represented by an index, and each index corresponds to a TRP. When the UE detects that downlink quality corresponding to a certain TRP is overly low (as described above, or a new threshold for determining link quality may be defined), the physical layer reports and indicates a beam failure instance indication to the MAC layer. The MAC layer determines, by means of whether the accumulated number of indications reaches a maximum value and whether a timer expires, whether a beam failure has occurred, as described above. *beamFailureDetectionTimer* and *beamFailurelnstanceMaxCount* of different TRPs may be configured with different values, or may be configured with the same value (a plurality of TRPs correspond to one parameter value, or each TRP is respectively configured with two sets of parameter values, and the two sets of parameter values are equal). In order to support separate processing of each TRP, each TRP is configured with one variable *RFI_COUNTER* for counting the number of beam failure instance indications. The UE may detect a reference signal set for BFD and/or BFR corresponding to the TRP, so as to find a candidate reference signal when beam failure occurs. When the MAC determines that a beam failure has occurred, a BFR procedure is initiated for the TRP, and the procedure may be implemented by means of transmitting a MAC CE.

For a non-serving cell, a BFD and BFR procedure may also be performed. The procedure is as described above, and is not described herein again.

The present invention considers how UE performs beam failure recovery in a multi-beam and/or multi-TRP scenario so as to be able to quickly recover from a beam failure to perform data transmission, thereby improving performance.

Hereinafter, several embodiments of the present invention for addressing the above problems are described in detail.

### Embodiment 1

The present embodiment includes steps 101, 103, and 105.

Optionally, in step 101, UE receives a configuration by a network for a beam failure recovery procedure/parameter of each TRP (per TRP or TRP specific) of a serving cell. The configuration may include, but is not limited to: a reference signal or a reference signal set (may include a reference signal index or a reference signal set index) for BFD and/or BFR, and information such as a maximum counter value (e.g., *beamFailurelnstanceMaxCount* or another name) for counting beam failure instance indications and a relevant timer (e.g., *beamFailureDetectionTimer* or another name).

Optionally, in step 103, a MAC entity of the UE receives a beam failure instance indication from a physical layer.

For each TRP configured with a reference signal set for BFD and/or BFR, if the MAC entity of the UE receives, from a lower layer (the physical layer), a beam failure instance indication related to a TRP (e.g., the beam failure instance indication may carry TRP information to enable the MAC entity to identify a TRP or TRPs for which the beam failure instance indication is reported, and may also carry serving cell information), the MAC entity determines whether a beam failure has occurred at the TRP.

If BFI_COUNTER of one TRP indicated by the beam failure instance indication or each TRP indicated by the beam failure instance indication is greater than or equal to *beamFailurelnstanceMaxCount* of the TRP, or if the TRP has triggered a BFR procedure, the MAC entity may consider that a beam failure has occurred at the TRP.

If the MAC entity determines that a beam failure has occurred at the TRP, and optionally, if the serving cell is an SpCell (i.e., the serving cell is not an SCell), the UE performs one or a plurality of the following determinations or operations:
1) if each TRP among two TRPs of the serving cell is configured with a reference signal set for the BFD and/or the BFR (optionally, the two TRPs or the two reference signal sets are both activated), if the BFR MAC CE for the other TRP has been triggered and/or transmitted, and if the BFR recovery procedure corresponding to the other TRP has not been successfully completed, initiating a random access procedure to recover from the beam failure;
2) if each TRP among the two TRPs of the serving cell is configured with a reference signal set for the BFD and/or the BFR (optionally, the two TRPs or the two reference signal sets are both activated), if the BFR MAC CE for the other TRP has been triggered and/or transmitted, and if the other TRP has no candidate beam (e.g., an AC field in a BFR MAC CE of the other beam is set to "0", or another indication field for indicating whether a candidate beam is present indicates that no candidate beam is present), initiating a random access procedure to recover from the beam failure;
3) if each TRP among the two TRPs of the serving cell is configured with a reference signal set for the BFD and/or the BFR (optionally, the two TRPs or the two reference signal sets are both activated), and if BFI _COUNTER of the other TRP is greater than or equal to a maximum value (e.g., beamFailureInstanceMaxCount), initiating a random access procedure to recover from the beam failure;
4) if each TRP among the two TRPs of the serving cell is configured with a reference signal set for the BFD and/or the BFR (optionally, the two TRPs or the two reference signal sets are both activated), and if the BFR for the other TRP has been triggered and not canceled, initiating a random access procedure to recover from the beam failure;
5) if the serving cell is only configured with a reference signal set of one TRP for the BFD and/or the BFR, initiating a random access procedure to recover from the beam failure; and
6) if each TRP among the two TRPs of the serving cell is configured with a reference signal set for the BFD and/or the BFR, but only one TRP or only one reference signal set for the BFD and/or the BFR is activated, and if the TRP of which *BFI_*COUNTER is greater than or equal to beamFailureInstanceMaxCount is the activated TRP or reference signal set, initiating a random access procedure to recover from the beam failure.

The BFR MAC CE per TRP or the TRP specific BFR MAC CE may mean that each TRP reports one MAC CE, or may mean that one MAC CE is used for reporting of beam failure recovery of two or more TRPs. In the latter case, "the BFR MAC CE for the other TRP" in the above description may also be interpreted as: a BFR MAC CE including beam failure recovery-related information of another TRP.

Alternatively, if the MAC entity determines that the beam failure has occurred at the TRP, optionally, if the serving cell is an SCell, and if the beam failure recovery procedure determines that at least one BFR for one TRP of one SCell has been triggered and not canceled and evaluation of candidate beams of the TRP has been completed, the UE performs one or a plurality of the following determinations or operations:
1) if each TRP among the two TRPs of the serving cell is configured with a reference signal set for the BFD and/or the BFR (optionally, the two TRPs or the two reference signal sets are both activated), if a UL-SCH resource for a new transmission is available, and if the UL-SCH resource can accommodate the beam failure information of one TRP in the BFR MAC CE plus a subheader of the MAC CE, but cannot accommodate the beam failure information of all of the TRPs (e.g., the two TRPs), triggering the SR procedure for the beam failure recovery;
2) if the serving cell is only configured with a reference signal set of one TRP for the BFD and/or the BFR, if the UL-SCH resource for a new transmission is available, and if the UL-SCH resource cannot accommodate the BFR MAC CE plus the subheader of the MAC CE, triggering the SR procedure for the beam failure recovery (optionally, the SR procedure may be triggered for the SCell, and the SR procedure may also be triggered for the TRP); and
3) if each TRP among the two TRPs of the serving cell is configured with a reference signal set for the BFD and/or the BFR, but only one TRP or only one reference signal set for the BFD and/or the BFR is activated, if the UL-SCH resource for a new transmission is available, and if the UL-SCH resource cannot accommodate the BFR MAC CE plus the subheader of the MAC CE, triggering the SR procedure for the beam failure recovery (optionally, the SR procedure may be triggered for the SCell, and the SR procedure may also be triggered for the activated TRP).

The SR procedure may be triggered for the SCell, and the SR procedure may also be triggered for the TRP.

Optionally, in step 105, if the serving cell is an SCell, when a MAC PDU is transmitted, and if the PDU includes a BFR MAC CE or truncated BFR MAC CE,
1) if each TRP among the two TRPs of the serving cell is configured with a reference signal set for the BFD and/or the BFR (optionally, the two TRPs or the two reference signal sets are both activated), and if the BFR MAC CE includes the beam failure information of all of the TRPs in the SCell, canceling, by the UE, all of the triggered BFRs (optionally, of all of the TRPs in the SCell) for the SCell; if the BFR MAC CE includes only the beam failure information of one TRP in the SCell, canceling, by the UE, all of the triggered BFRs for the TRP;
2) if the serving cell is only configured with a reference signal set of one TRP for the BFD and/or the BFR, and if the BFR MAC CE includes the beam failure information of the TRP, canceling, by the UE, all of the triggered BFRs for the TRP (or the serving cell); and
3) if each TRP among the two TRPs of the serving cell is configured with a reference signal set for the BFD and/or the BFR, but only one TRP or only one reference signal set for the BFD and/or the BFR is activated, and if the MAC CE includes the beam failure information of the activated TRP, canceling, by the UE, all of the triggered BFRs for the activated TRP (or the serving cell).

In the present embodiment, the description is provided by using only the example in which a serving cell is configured with two TRPs and two reference signal sets for BFR and/or BFD, but the described determinations and operations are also applicable to a serving cell configured with more than two TRPs for BFR/BFD. In such a scenario, in the determinations and operations, "two" is replaced with "a plurality of', "the other" being replaced with "all of the other", and "that" being replaced with "those".

### Embodiment 2

The present embodiment includes steps 201 and 203.

Optionally, in step 201, UE receives a beam failure recovery procedure/parameter configured for a non-serving cell by a network. The configuration may include, but is not limited to: cell information (e.g., PCI information, a non-serving cell index, a cell identifier, etc.), a reference signal or a reference signal set (may include a reference signal index or a reference signal set index) for BFD and/or BFR, and information such as a maximum counter value (e.g., beamFailureInstanceMaxCount or another name) for counting beam failure instance indications, a relevant timer, reference signal or reference signal set measurement configurations (measurements may include, but are not limited to, SINR, RSRP, RSRQ, etc.), and a TCI parameter.

Optionally, in step 203, when the non-serving cell triggers BFR, a BFR MAC CE is transmitted to the network, wherein optionally, the BFR MAC CE may carry information for differentiating or indicating that the cell is a non-serving cell, such as non-serving cell PCI information, a non-serving cell index, a non-serving cell identifier, etc.

### Embodiment 3

The present embodiment includes steps 301 and 303.

Optionally, step 301 is the same as step 201.

Optionally, in step 303, the UE receives a MAC CE transmitted by the network, and if the MAC CE includes one or a plurality of the following pieces of information:
1) a deactivation indication of a TRP in the non-serving cell;
2) a deactivation indication of the non-serving cell;
3) the non-serving cell being used for reference signal measurement of BFR and/or BFD; and
4) a deactivation indication of a TCI state of the non-serving cell.

The UE performs one or a plurality of the following operations:
1) setting BFI COUNTER of the non-serving cell to 0;
2) considering that a beam failure recovery procedure is successfully completed, and canceling all BFRs triggered in the non-serving cell; and
3) stopping a random access procedure triggered due to a pending SR of the BFR.

### Embodiment 4

The present embodiment includes steps 401 and 403.

Optionally, step 401 is the same as step 101.

Optionally, in step 403, if BFR of the TRP in the SCell has generated a pending SR, and if a random access procedure has been triggered because there is no valid PUCCH resource configuration and thus the SR cannot be transmitted, after a BFR MAC CE or truncated BFR MAC CE including the TRP is transmitted, the random access procedure triggered for the BFR of the TRP is stopped.

Alternatively, step 403 may also be that, if a beam failure occurs at both of the two TRPs in the SCell or both of the two reference signal sets for the BFR and/ the BFD, if a pending SR is generated for the two BFRs, and if a random access procedure has been triggered because there is no valid PUCCH resource configuration and thus the SR cannot be transmitted, the random access procedure is stopped after a BFR MAC CE or truncated BFR MAC CE including the two TRPs is transmitted. Optionally, in this case, the SCell may also be deactivated, and all triggered BFRs for the SCell may be canceled.

Alternatively, in step 403, if two BFRs are triggered because a beam failure occurs at both of the two TRPs in the SCell or both of the two reference signal sets for the BFR and/ the BFD, if two pending SRs are generated for the two BFRs, and if two random access procedures have been triggered because there is no valid PUCCH resource configuration and thus the two SRs cannot be transmitted, then after a BFR MAC CE or truncated BFR MAC CE including one of the TRPs is transmitted, the random access procedure of the TRP is stopped, that is, the random access procedure of the other TRP continues to be performed.

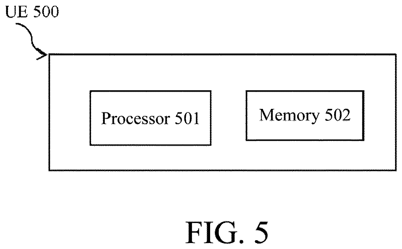

FIG. 5 is a simplified structural block diagram of user equipment (UE) according to the present invention. As shown in FIG. 5, user equipment (UE) 500 includes a processor 501 and a memory 502. The processor 501 may include, for example, a microprocessor, a microcontroller, an embedded processor, and the like. The memory 502 may include, for example, a volatile memory (such as a random access memory (RAM)), a hard disk drive (HDD), a non-volatile memory (such as a flash memory), or other memories. The memory 502 stores program instructions. The instructions, when run by the processor 501, can implement the above method performed by user equipment as described in detail in the present invention.

The program running on the device according to the present invention may be a program that enables a computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by the computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by user equipment, comprising:
receiving, by user equipment, a configuration by a network for a beam failure recovery procedure/parameter of each transmit/receive point of a serving cell; and
for each transmit/receive point configured with a reference signal set for beam failure detection and/or beam failure recovery, if a medium access control entity receives a beam failure instance of a physical layer indicating the transmit/receive point, and if the medium access control entity considers that a beam failure has occurred at the transmit/receive point, initiating, according to a beam failure detection and recovery situation of another transmit/receive point in the serving cell, a random access procedure or a sounding reference procedure to perform beam failure recovery.

2. The method performed by user equipment according to claim 1, wherein
the configuration by the network for the beam failure recovery procedure/parameter of each TRP of the serving cell comprises a reference signal or a reference signal set for the BFD and/or the BFR, and information such as a maximum counter value for counting beam failure instance indications and a relevant timer.

3. The method performed by user equipment according to claim 1, wherein
upon receiving a beam failure instance indication of the physical layer indicating the beam failure instance of the TRP, if BFI_COUNTER of the TRP is greater than or equal to *beamFailurelnstanceMaxCount* of the TRP, the MAC entity considers that the beam failure has occurred at the TRP.

4. The method performed by user equipment according to claim 1, wherein
the beam failure has occurred at the TRP, the serving cell is the SpCell, and the UE performs one or a plurality of the following determinations and operations:
if each TRP among the two TRPs of the serving cell is configured with a reference signal set for the BFD and/or the BFR, if the BFR MAC CE for the other TRP has been triggered and/or transmitted, and if the BFR recovery procedure corresponding to the TRP has not been successfully completed, initiating a random access procedure to recover from the beam failure;
if each TRP among the two TRPs of the serving cell is configured with a reference signal set for the BFD and/or the BFR, if the BFR MAC CE for the other TRP has been triggered and/or transmitted, and if the TRP has no candidate beam, initiating a random access procedure to recover from the beam failure;
if each TRP among the two TRPs of the serving cell is configured with a reference signal set for the BFD and/or the BFR, if BFI COUNTER of the other TRP is greater than or equal to a maximum value, initiating a random access procedure to recover from the beam failure;
if each TRP among the two TRPs of the serving cell is configured with a reference signal set for the BFD and/or the BFR, and if the BFR for the other TRP has been triggered and not canceled, initiating a random access procedure to recover from the beam failure;
if the serving cell is only configured with a reference signal set of one of the TRPs for the BFD and/or the BFR, initiating a random access procedure to recover from the beam failure;
and if each TRP among the two TRPs of the serving cell is configured with a reference signal set for the BFD and/or the BFR, if only one of the TRPs or only one reference signal set for the BFD and/or the BFR is activated, and if the TRP of which BFI_COUNTER is greater than or equal to beamFailureInstanceMaxCount is the activated TRP or reference signal set, initiating a random access procedure to recover from the beam failure.

5. The method performed by user equipment according to claim 4, wherein
the beam failure has occurred at the TRP, the serving cell is an SCell, the beam failure recovery procedure determines that at least one of the BFRs for one of the TRPs of one of the SCells has been triggered and not canceled and evaluation of candidate beams of the TRP has been completed, and the UE performs one or a plurality of the following determinations or operations:
if each TRP among the two TRPs of the serving cell is configured with a reference signal set for the BFD and/or the BFR, if an uplink shared channel (UL-SCH) resource for a new transmission is available, and if the UL-SCH resource can accommodate the beam failure information of one of the TRPs in the BFR MAC CE plus a subheader of the MAC CE, but cannot accommodate the beam failure information of all of the TRPs, triggering the SR procedure for the beam failure recovery;
if the serving cell is only configured with a reference signal set of one of the TRPs for the BFD and/or the BFR, if the UL-SCH resource for a new transmission is available, and if the UL-SCH resource cannot accommodate the BFR MAC CE plus the subheader of the MAC CE, triggering the SR procedure for the beam failure recovery; and
if each TRP among the two TRPs of the serving cell is configured with a reference signal set for the BFD and/or the BFR, but only one of the TRPs or only one reference signal set for the BFD and/or the BFR is activated, if the UL-SCH resource for a new transmission is available, and if the UL-SCH resource cannot accommodate the BFR MAC CE plus the subheader of the MAC CE, triggering the SR procedure for the beam failure recovery.

6. The method performed by user equipment according to claim 1, wherein
the serving cell is the SCell, and when a MAC PDU is transmitted, and the PDU comprises the BFR MAC CE or the truncated BFR MAC CE,
if each TRP among the two TRPs of the serving cell is configured with a reference signal set for the BFD and/or the BFR, and if the BFR MAC CE comprises the beam failure information of all of the TRPs in the SCell, the UE cancels all of the triggered BFRs for the the SCell; if the BFR MAC CE comprises only the beam failure information of one of the TRPs in the the SCell, the UE cancels all of the triggered BFRs for the TRP;
if the serving cell is only configured with a reference signal set of one of the TRPs for the BFD and/or the BFR, and if the MAC CE comprises the beam failure information of the TRP, the UE cancels all of the triggered BFRs for the the TRP; and
if each TRP among the two TRPs of the serving cell is configured with a reference signal set for the BFD and/or the BFR, but only one of the TRPs or only one reference signal set for the BFD and/or the BFR is activated, and if the MAC CE comprises the beam failure information of the activated TRP, the UE cancels all of the triggered BFRs for the activated TRP.

7. The method performed by user equipment according to claim 1, wherein
if the BFR of the TRP in the SCell has generated the pending SR, and if a random access procedure has been triggered because there is no valid PUCCH resource configuration and thus the SR cannot be transmitted, the random access procedure triggered for the BFR of the TRP is stopped after a BFR MAC CE or truncated BFR MAC CE comprising the TRP is transmitted,
if a beam failure occurs at both of two TRPs in the SCell or both of two reference signal sets for the BFR and/ the BFD, if a pending signal reception (SR) is generated for the two BFRs, and if a random access procedure has been triggered because there is no valid PUCCH resource configuration and thus the SR cannot be transmitted, the random access procedure is stopped after the BFR MAC CE or the truncated BFR MAC CE comprising the two TRPs is transmitted,
if the two BFRs are triggered because the beam failure occurs at both of the two TRPs in the SCell or both of the two reference signal sets for the BFR and/ the BFD, if two pending SRs are generated for the two BFRs, and if two random access procedures have been triggered because there is no valid physical uplink control channel (PUCCH) resource configuration and thus the two SRs cannot be transmitted, then after the BFR MAC CE or the truncated BFR MAC CE comprising one of the TRPs is transmitted, the random access procedure of the TRP is stopped, that is, the random access procedure of the other TRP continues to be performed.

8. A method performed by user equipment, comprising:
receiving, by user equipment (UE), a beam failure recovery procedure/parameter configured for a non-serving cell by a network, and
when the non-serving cell triggers beam failure recovery (the BFR), transmitting, by the user equipment (UE), the BFR MAC CE to the network,
wherein the BFR MAC CE carries: information such as non-serving cell PCI information, a non-serving cell index, and a non-serving cell identifier.

9. The method performed by user equipment according to claim 8, wherein
the UE receives the MAC CE transmitted by the network, and the MAC CE comprises one or a plurality of the following pieces of information:
a deactivation indication of the TRP in the non-serving cell;
a deactivation indication of the non-serving cell;
the non-serving cell being used for reference signal measurement of the BFR and/or the BFD; and
a deactivation indication of the TCI state of the non-serving cell.
The UE performs one or a plurality of the following operations:
setting BFI_COUNTER of the non-serving cell to 0;
considering that a beam failure recovery procedure is successfully completed, and canceling all of the BFRs triggered in the non-serving cell; and
stopping a random access procedure triggered due to the pending SR of the BFR.

10. User equipment, comprising:
a processor; and
a memory storing instructions,
wherein the instructions, when run by the processor, perform the method according to any one of claims 1 to 9.
